# EUROPEAN PATENT APPLICATION

(11) **EP 2 045 165 A2**
(43) Date of publication of application: **08.04.2009**
(21) Application number: 08017477.4
(22) Date of filing: 06.10.2008
(51) Int. Cl.: B62B 1/00, B62B 1/20

(54) **Wheelbarrow**

(30) Priority: 04.10.2007 GB 0719384
(71) Applicant: Smither, Bryan Charles, Southport Merseyside PR8 4SY (GB)
(72) Inventor: Smither, Bryan Charles, Southport Merseyside PR8 4SY (GB)
(74) Representative: Moore, Christopher Mark

(57) **Abstract**

A wheelbarrow comprising a support frame (12); a first wheel (16) attached to a forward portion of the support frame (12), the first wheel (16) in free rotation in a first vertical plane; an undercarriage (24) pivotally attached to the support frame (12), the undercarriage (24) comprising a second wheel (26) in free rotation in the first vertical plane, the undercarriage (24) being capable of pivotal movement; wherein the undercarriage (24) is guided in pivotal movement by one or more undercarriage guide rails (22).

## Description

The present invention relates to a wheelbarrow and a chassis for a wheelbarrow.

Wheelbarrows have typically comprised a load carrying hopper mounted upon a chassis, to which is affixed a single wheel at the front end and one or more legs at the rear end. Handles extend from the rear of the chassis to enable the user to elevate the rear end of the chassis such that the legs are lifted from the ground and the barrow may be moved. The load is thus supported by both the wheel and the user.

EP110647 describes a wheelbarrow having an auxiliary wheel. This auxiliary wheel has its axle engaging in two vertical supports which are incorporated at their upper ends into a joint, connected in such a way that it can rotate in a vertical plane about a connecting member secured to the wheelbarrow's two handles. The joint can be reversibly fixed to the connecting member to prevent the relative rotation.

There is a need for a two-wheeled wheelbarrow of a robust and stable construction, able to withstand frequent use in transporting heavy loads. Furthermore, there is a need for a two-wheeled wheelbarrow capable of being adjusted in its movement position to suit the height and build of an individual user.

One aspect of the invention provides a wheelbarrow comprising:
a support frame;
a first wheel attached to a forward portion of the support frame, the first wheel in free rotation in a first vertical plane;
an undercarriage pivotally attached to the support frame, the undercarriage comprising a second wheel in free rotation in the first vertical plane, the undercarriage being capable of pivotal movement;
wherein the undercarriage is guided in pivotal movement by one or more undercarriage guide rails.

Preferably, the wheelbarrow further comprises at least one handle extending from a rear portion of the support frame. Preferably, the wheelbarrow also comprises two or more legs extending downwardly from said support frame.

Preferably, the undercarriage is guided in pivotal movement by at least two guide rails. In a preferred embodiment, undercarriage guide rails are integrally formed with the legs.

The wheelbarrow preferably further comprises a vessel secured atop the support frame for the carriage of materials.

The undercarriage preferably further comprises a swing arm, the second wheel being mounted at the end of the swing arm distal from the support frame. More preferably or alternatively the undercarriage comprises a pair of swing arms holding an axle, about which the second wheel is in free rotation.

In a preferred embodiment the invention provides a catch means for reversibly fastening the undercarriage to the one or more undercarriage guide rails, so as to prevent pivotal movement of the undercarriage. The catch means preferably comprises a bolt attached to the undercarriage, the bolt having a locking portion adapted to engage with at least one catch aperture in the undercarriage guide rail. Preferably, the catch means further comprises an urging means for resiliently urging the lock portion into the catch aperture. Preferably, there are comprised a plurality of catch apertures in the guide rails, such that the undercarriage may be fastened in a position appropriate for an individual user.

Preferably, the catch means further comprises a catch controller comprising a lever mounted to the handle. Preferably, the catch controller further comprises a cable attached at a first end to the lever and at a second end to the bolt, such that an actuation of the lever results in a disengagement of the locking portion from the catch aperture.

Preferably, the wheelbarrow further comprises a safety mechanism for returning the wheelbarrow to a failsafe position in the event that the wheel barrow is dropped in use.
Figure 1 shows a profile view of a wheelbarrow according to the present invention in a rest position;
Figure 2 shows a profile view of a wheelbarrow of Figure 1 in a transit position;

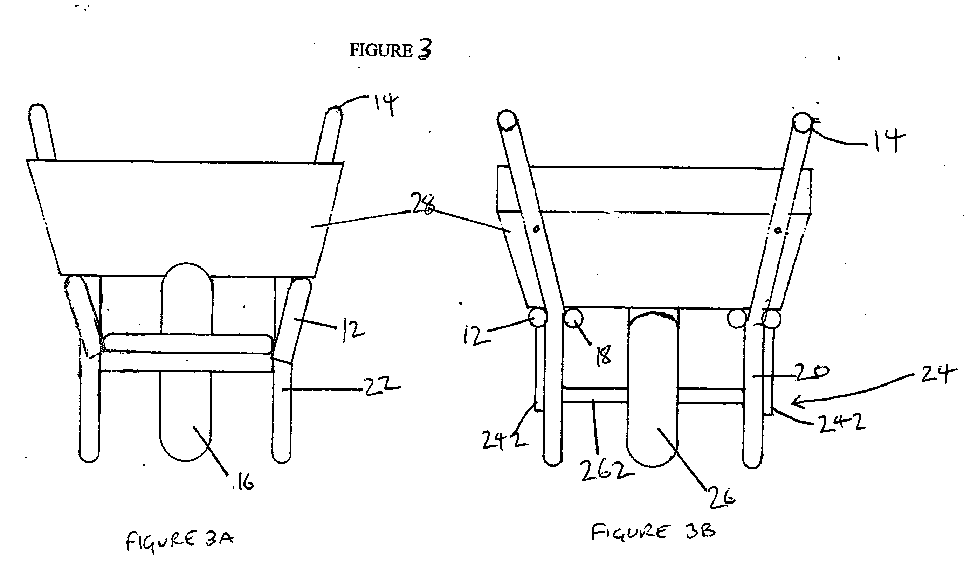

Figure 3A shows a front view of a wheelbarrow of Figure 1 in a rest position. Figure 3B shows a rear view of a wheelbarrow of Figure 1 in a rest position; and
Figure 4 shows a catch means as used by the present invention.

A preferred embodiment of the present invention will now be described, with reference to the accompanying drawings.

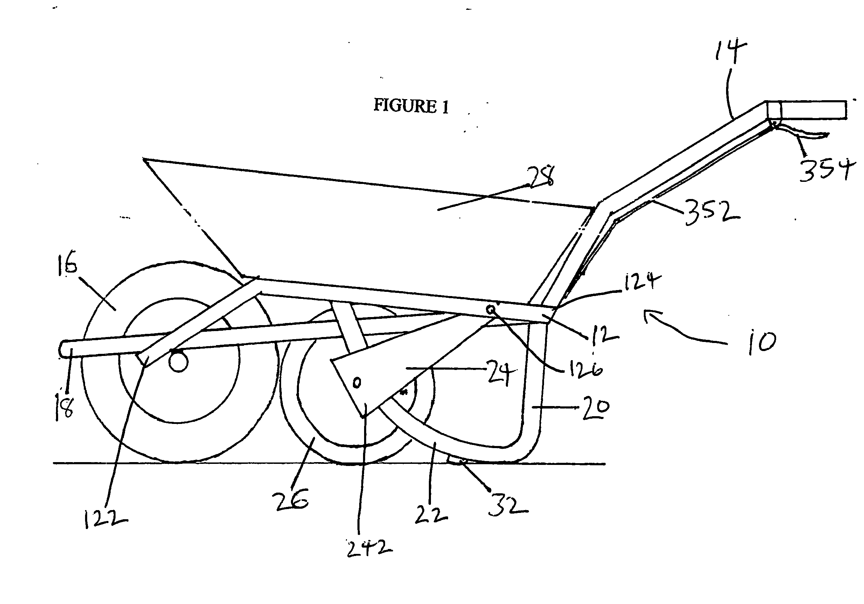

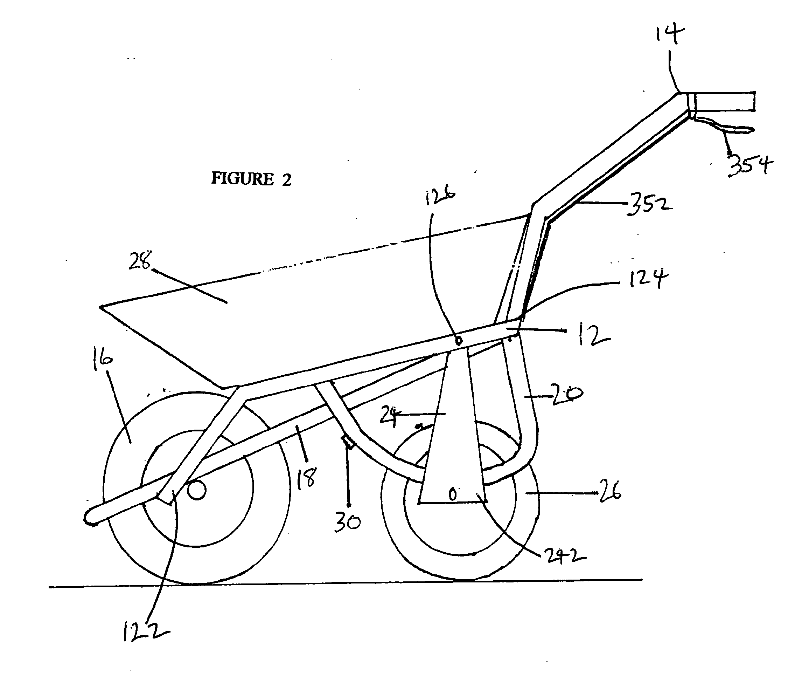

Figures 1 and 2 show profile views of a wheelbarrow according to the present invention, the wheelbarrow having a chassis 10 which comprises a support frame 12 having a forward portion 122 and a rear portion 124. Handles 14 extend from the rear portion 124 to allow the user to manoeuvre the wheelbarrow. A first wheel 16 is attached to the forward portion 122 via a crossbar 18. The first wheel 16 is in free rotation in a vertical plane. Attached to the support frame 12 at its rear portion 122 are downwardly extending legs 20. Arced guide rails 22 also extend downwards from support frame 12 and are preferably integrally formed with the legs 20, as shown.

The undercarriage 24 comprises a second wheel 26, an axle 262 and a pair of swing arms 242. The axle 262 is held horizontally between the lower ends of the swing arms 242 such that the second wheel 26 is freely rotatable on the axle 262 in the same vertical plane as the first wheel 16. The undercarriage 24 is pivotally attached to the support frame 12 at a pivot point 126. The lower ends of the swing arms 242 are guided, along therefore with the rest of undercarriage 24, in any pivotal movement about pivot points 126 by arced guide rails 22.

A hopper 28, for the containment and carriage of materials, is secured atop support frame 12.

The undercarriage further comprises catch mechanisms 34, mounted to the swing arms 242, for reversibly fastening the undercarriage 24 to the arced guide rails 22 when the chassis is in the transit position.

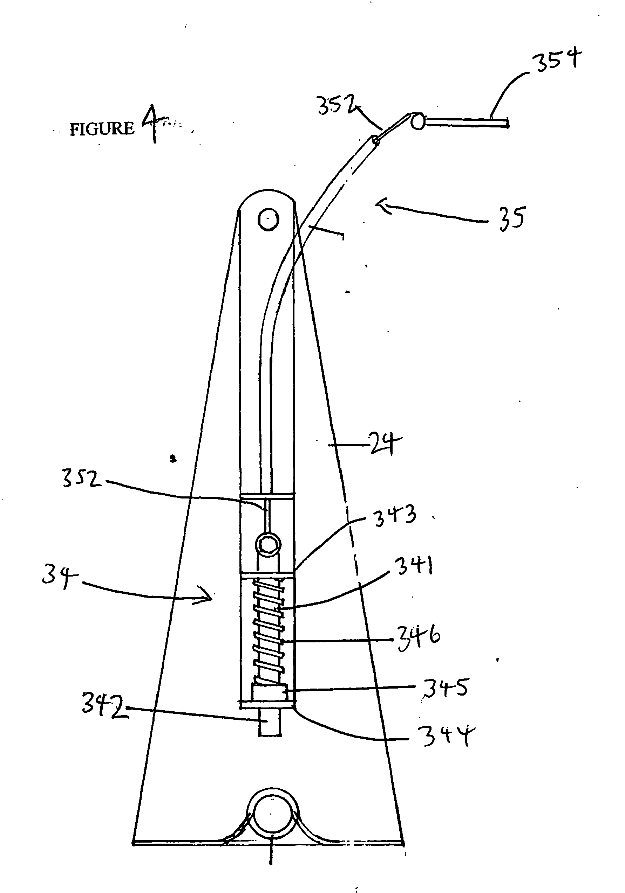

The catch mechanism 341 is shown in Figure 4. A bolt 341 is threaded through a first swing arm flange 343 and a second swing arm flange 344, each of which is secured to the swing arm 24. A bolt flange 345 is secured to the bolt 341 between the first swing arm flange 343 and the second swing arm flange 344. The bolt flange 345 acts to prevent complete passage of the bolt 341 through the second swing arm flange 344, leaving a locking portion 342 of the bolt 341 protruding through the second swing arm flange 344. A spring 346 is threaded onto bolt 341 to engage with both first swing arm flange 343 and bolt flange 345 to resiliently urge the bolt flange 345 against the second swing arm flange 344, and thus the locking portion 342 of the bolt 341 through the second swing arm flange 344.

There is further provided a catch control means 35, for engaging and disengaging the catch mechanism 34. The catch control means 35 preferably comprises an actuating lever 354 and a cable 352. The cable 352 is attached to the lever 354 at a first end and to the bolt 341 at a second end.

The locking portion 342 of the bolt 341 engages with corresponding catch apertures (not shown) in the guide rail 22. Preferably, a series of catch apertures are provided along the guide rails 22 between the rest stop 30 and the transit stop 32, such that the user may secure the chassis 10 in a transit position whereby the elevation of the handles 14 is appropriate to his or her height. Each of the guide rails 22 preferably has at least one catch aperture, in such a position to allow the locking portion 342 of bolt 341 to engage with the aperture while the axle 262 or swing arm 24 abuts the transit stop 32. The guide rails 22 may also include a catch aperture positioned so as to secure the chassis 10 in a rest position, whereby the user may manoeuvre the wheelbarrow as if it were a conventional single-wheeled wheelbarrow.

While in a rest position, the weight of the chassis 10 and any materials in the hopper 28 is supported by an effective tripod of the first wheel 16 and the legs 20. The second wheel 26 is positioned such that it is resting on the ground, underneath the hopper support frame 12. An optional rest stop 30 may be affixed to one or both of the arced guide rails 22 to abut the undercarriage 24 while the chassis 10 is in the rest position. In such instance, a portion of the load of the chassis 10 and any materials in the hopper 28 is also supported by the second wheel 26.

When a user wishes to move the wheelbarrow, he must adjust the chassis 10 to a transit position. This is achieved by vertically lifting the handles 14, whereby the user causes the chassis 10 to pivot about the first wheel 16. First, the user must release the locking portion 342 from the corresponding catch aperture. User actuation of the lever 354 exerts a pull force on the bolt 341, via the cable 347, further coiling spring 346 and withdrawing the locking portion 342 from the corresponding catch aperture. While the lever 348 is depressed, the swing arms 24 are free to pivot about pivot point 126, as controlled by the user's elevation of the handles 14. The undercarriage 24 thus pivots under gravitational force, guided by the arced guide rails 22 such that the second wheel 26 remains in contact with the ground at least until such time as the handles 14 are raised sufficiently for the undercarriage 24 to abut a transit stop 32. When the user has lifted the handles to a position appropriate to his or her height, then the lever 354 is released and the spring 346 resiliently urges the locking portion 342 of bolt 341 into a corresponding catch aperture. This feature allows the second wheel 26 to bear a portion of the load, leaving the user to merely balance the wheelbarrow via handles 14. The user may comfortably manoeuvre the wheelbarrow while the chassis 10 is in the transit position. A further advantage afforded by the fastening of the undercarriage 24 to the guide rails 22 is represented by the efficient and well balanced spreading of load across the rear of chassis 10.

Optionally, the wheelbarrow further comprises a safety mechanism for returning the wheelbarrow to a failsafe rest position, in the event that the user is unable to fully lift the handles 14 to a suitable transit position. The safety mechanism thus prevents the wheelbarrow from securing itself in a transit position out of the user's control and toppling over. The safety mechanism may comprise a series of wedges attached to, or formed within, the guide rails 22, adjacent to and at the lower edge of each of the catch apertures. If the handles 14 are dropped by the user while the wheelbarrow is not secured in a transit position, the wedges act on the locking portion 342 of the bolt 341, urging the locking portion 342 away from the catch apertures, as the wheelbarrow falls under gravity and the undercarriage 24 pivots back toward the support frame 12. The locking portion 342 of bolt 341 thus skips over each of the catch apertures in the guide rails 22, until the wheelbarrow returns to the rest position.

## Claims

1. A wheelbarrow comprising:
a support frame;
a first wheel attached to a forward portion of the support frame, the first wheel in free rotation in a first vertical plane;
an undercarriage pivotally attached to the support frame, the undercarriage comprising a second wheel in free rotation in the first vertical plane, the undercarriage being capable of pivotal movement;
wherein the undercarriage is guided in pivotal movement by one or more undercarriage guide rails.

2. A wheelbarrow according to claim 1, further comprising at least one handle extending from a rear portion of the support frame.

3. A wheelbarrow according to claims 1 or 2, further comprising two or more legs extending downwardly from said support frame.

4. A wheelbarrow according to claim 3, wherein the undercarriage guide rails are integrally formed with the legs.

5. A wheelbarrow according to any preceding claim, further comprising a vessel secured atop the support frame for the carriage of materials.

6. A wheelbarrow according to any preceding claim, wherein the undercarriage further comprises a pair of swing arms holding an axle, about which the second wheel is in free rotation.

7. A wheelbarrow according to any preceding claim, further comprising a catch means for reversibly fastening the undercarriage to the one or more undercarriage guide rails, so as to prevent pivotal movement of the undercarriage.

8. A wheelbarrow according to claim 7, wherein the catch means comprises a bolt attached to the undercarriage, the bolt having a locking portion adapted to engage with at least one catch aperture in the guide rail.

9. A wheelbarrow according to claim 8, wherein the catch means further comprises an urging means for resiliently urging the lock portion into the catch aperture.

10. A wheelbarrow according to claims 8 or 9, further comprising a plurality of catch apertures in the guide rails, such that the undercarriage may be fastened in a position appropriate for an individual user.

11. A wheelbarrow according to any of claims 7 to 10, wherein the catch means further comprises a catch controller.

12. A wheelbarrow according to claim 11, where said catch controller comprises a lever mounted to the handle.

13. A wheelbarrow according to claim 12, where the catch controller further comprises a cable attached at a first end to the lever and at a second end to the bolt, such that an actuation of the lever results in a disengagement of the locking portion from the catch aperture.

14. A wheelbarrow according to any of claims 7 to 13 comprising a safety mechanism for returning the wheelbarrow to a failsafe position in the event that the wheel barrow is dropped in use.
